# EUROPÄISCHE PATENTSCHRIFT

(11) **EP 3 556 951 B1**
(45) Veröffentlichungstag und Bekanntmachung des Hinweises auf die Patenterteilung: **20.11.2024**
(21) Anmeldenummer: 19168607.0
(22) Anmeldetag: 11.04.2019
(51) Int. Cl.: E03C 1/04, E03C 1/02

(54) **SANITÄRVENTILBLOCK**
SANITARY VALVE BLOCK
BLOC DE SOUPAPE SANITAIRE

(30) Priorität: 16.04.2018 DE 102018205748
(43) Veröffentlichungstag der Anmeldung: 23.10.2019
(73) Patentinhaber: Hansgrohe SE, 77761 Schiltach (DE)
(72) Erfinder: Armbruster, Stefan, 77756 Hausach (DE); Blattner, Joachim, 77773 Schenkenzell (DE); Obert, Wolfgang, 77790 Steinach (DE)
(74) Vertreter: Patentanwälte Ruff, Wilhelm, Beier, Dauster & Partner mbB

(56) Entgegenhaltungen:
- EP-A1- 0 694 721
- EP-A1- 2 365 237
- EP-A1- 2 937 476
- WO-A1-2006/077109
- CA-A1- 2 843 596
- CN-A- 1 869 486
- CN-A- 101 949 462
- DE-U1- 29 720 408
- US-A1- 2003 132 306
- US-A1- 2004 133 975
- US-A1- 2009 242 052
- US-A1- 2017 328 040
- US-B1- 6 321 777

## Beschreibung

Die Erfindung bezieht sich auf einen Sanitärventilblock nach dem Oberbegriff des Anspruchs 1.

Sanitärventilblöcke, die einen Grundkörper mit einer Kartuschenaufnahme, mindestens einem Wassereinlass, mindestens einem Wasserauslass, einer sich vom mindestens einen Wassereinlass zur Kartuschenaufnahme erstreckenden Zulaufkanalstruktur und einer sich von der Kartuschenaufnahme zum mindestens einen Wasserauslass erstreckenden Abführkanalstruktur sowie eine in die eingefügte Ventilkartusche umfassen, werden in verschiedenen Bauarten verwendet, z.B. für sanitäre Misch- und/oder Absperrventile. So ist in der Offenlegungsschrift DE 10 2014 200 717 A1 eine sanitäre Mischerarmatur offenbart, die einen Armaturengrundkörper mit einem zwischen einem Katuschenaufnahmeboden und einem Kartuschenaufnahmedeckel gebildeten Kartuschenaufnahmeraum und eine im Kartuschenaufnahmeraum angeordnete Mischventilkartusche aufweist. Eine in der Offenlegungsschrift DE 10 2011 085 346 A1 offenbarte Sanitärarmatur beinhaltet ein mit einem Sockelbauteil verbindbares Aufnahmebauteil, das einen Aufnahmeraum für eine Ventilkartusche und einen Boden zum Anschluss von Zulaufleitungen aufweist, wobei ein Armaturengehäuse das Sockelbauteil und das Aufnahmebauteil mit Ausnahme eines Zugangs für die Ventilkartusche vollständig umgibt und an dem Aufnahmebauteil befestigt ist. Die Offenlegungsschrift DE 10 2012 212 302 A1 offenbart eine Sanitärarmatur, die ein Armaturengehäuse mit einem im wesentlichen geradlinigen Innenraum für Zuleitungen und/oder Ableitungen und eine vom Innenraum abzweigende Aufnahme für eine Mischerkartusche aufweist. Im Innenraum ist ein Verbindungseinsatz angeordnet, der an einer Stirnseite Anschlüsse mindestens für eine Zuleitung aufweist. Zwischen dem Verbindungseinsatz und der Aufnahme für die Mischerkartusche ist ein Adaptereinsatz angeordnet, mit dem der Übergang zwischen dem Verbindungseinsatz und der Mischerkartusche an den Abzweigwinkel der Abzweigung der Mischerkartuschenaufnahme vom Innenraum angepasst werden kann.

Bei sanitären Auslaufarmaturen ist es bekannt, ein Einsatzelement, das ein Partikelsieb und/oder einen Durchflussregler aufweist, an einem Wasserauslaufelement anzuordnen, insbesondere an einem Auslaufrohr und vorzugsweise an dessen auslaufseitigem Endbereich. Durch das Partikelsieb sollen störende Partikel, wie Kalkpartikel, Sandpartikel und dgl., zurückgehalten werden. Der Begriff Durchflussregler soll vorliegend beliebige herkömmliche Elemente umfassen, die einen nennenswerten Einfluss auf die Wasserdurchflussmenge bzw. die Wasserdurchflussrate haben. Dies umfasst insbesondere auch Durchflussbegrenzer, d.h. die Durchflussmenge begrenzende Elemente, Belüfter, d.h. das durchströmende Wasser belüftende Elemente, Rückflussverhinderer, d.h. einen Wasserrückfluss verhindernde Elemente, und Strahlformer, d.h. strahlformende Elemente. Strahlformer sind häufig Bestandteil von am Wasseraustritt eines Auslaufrohres angeordneten Einsatzelementen. Diverse Einsatzelemente dieser Art für Wasserauslaufrohre sind in der Offenlegungsschrift DE 10 2008 012 388 A1 und den Patentschriften DE 10 2005 003 404 B3 und DE 10 2006 062 983 B3 offenbart.

Des Weiteren sind derartige Einsatzelemente mit Partikelsieb und/oder Durchflussregler zum Einsetzen in wasserführende Rohr- bzw. Schlauchleitungen geläufig, insbesondere im Bereich der Anschlussenden solcher Leitungen. So ist in der Gebrauchsmusterschrift DE 20 2016 004 959 U1 eine Schlauchanschlussvorrichtung mit einem Anschlussnippel offenbart, in dessen Innerem ein Partikelsieb und ein Rückflussverhinderer aufgenommen sind. Die Gebrauchsmusterschrift DE 297 03 335 U1 offenbart ein Einsatzelement, das einen Rückflussverhinderer und ein mit diesem lösbar verbindbares Partikelsieb beinhaltet. In der Patentschrift DE 197 01 846 C2 ist eine Sicherungseinrichtung für einen drucklosen Mischer offenbart, die in einem rohrförmigen Gehäusekörper in Strömungsrichtung hintereinander ein Partikelsieb, einen ersten und einen zweiten Rückflussverhinderer sowie einen mengenbegrenzenden Durchflussregler umfasst.

Sanitärventilblöcke nach dem Oberbegriff des Anspruchs 1 beinhalten eine sich in die Abführkanalstruktur hinein erstreckende Einsatzaufnahme, wobei sich optional eine oder mehrere weitere Einsatzaufnahmen in die Zulaufkanalstruktur oder in die Abführkanalstruktur hinein erstrecken können, und ein in die Einsatzaufnahme eingefügtes Einsatzelement, das ein Partikelsieb und/oder einen Durchflussregler aufweist. Solche und ähnliche Sanitärventilblöcke mit einer sich in die Zulaufkanalstruktur oder in die Abführkanalstruktur hinein erstreckenden Einsatzaufnahme sind in der Gebrauchsmusterschrift DE 297 20 408 U1, den Offenlegungsschriften US 2004/0133975 A1, US 2009/0242052 A1, US 2017/0328040 A1, EP 0 694 721 A1 und EP 2 937 476 A1 sowie der Patentschrift US 6.321.777 B1 offenbart. In Offenlegungsschriften CA 2 843 596 A1, EP 2 365 237 A1, US 2003/132306 A1, CN 101 949 462 A, CN 1 869 486 A, WO 2006/077109 A1 sind weitere Sanitärventilblöcke offenbart.

Der Erfindung liegt als technisches Problem die Bereitstellung eines Sanitärventilblocks der eingangs genannten Art zugrunde, der in seiner Funktionalität gegenüber den oben erwähnten herkömmlichen Sanitärventilblöcken verbessert ist und/oder fertigungstechnische Vorteile bietet.

Die Erfindung löst dieses Problem durch die Bereitstellung eines Sanitärventilblocks mit den Merkmalen des Anspruchs 1. In dem Sanitärventilblock ist ein Einsatzelement integriert, das ein Partikelsieb und/oder einen Durchflussregler beinhaltet. Dazu besitzt der Grundkörper des Sanitärventilblocks eine Einsatzaufnahme, in die das Einsatzelement eingefügt ist. Die Einsatzaufnahme erstreckt sich in die Abführkanalstruktur hinein, die sich von der Kartuschenaufnahme zum mindestens einen Wasserauslass erstreckt. Durch die vorteilhafte Integration des Einsatzelements in den Sanitärventilblock und speziell in eine Einsatzaufnahme in dessen Grundkörper kann das Anordnen eines solchen Einsatzelementes an einer anderen Stelle eines sanitären Wasserströmungsweges, in dem sich der Sanitärventilblock befindet, entfallen. So kann beispielsweise bei Verwendung des Sanitärventilblocks in einer sanitären Auslaufarmatur das Anordnen eines solchen Einsatzelementes am austrittsseitigen Ende einer zugehörigen Auslaufleitung bzw. eines zugehörigen Auslaufrohres entfallen. Der erfindungsgemäße Sanitärventilblock ermöglicht zudem die Integration des Einsatzelementes mit Partikelsieb und/oder Durchflussregler in einer kompakten Bauform. Der Grundkörper des Sanitärventilblocks kann vorzugsweise aus wenigen Bauteilen zusammengesetzt oder einteilig gefertigt sein.

Erfindungsgemäß ist die Einsatzaufnahme von einer Sacklochbohrung im Grundkörper des Sanitärventilblocks gebildet, wobei die Abführkanalstruktur an einer ersten Position in die Sacklochbohrung quer einmündet und aus der Sacklochbohrung an einer axial von der ersten beabstandeten zweiten Position quer ausmündet. Diese konstruktive Maßnahme kann für entsprechende Anwendungen fertigungstechnisch und hinsichtlich kompakter Bauform des Sanitärventilblocks Vorteile bieten.

In einer Weiterbildung der Erfindung befindet sich mindestens ein Wassereinlass einerseits und die Einsatzaufnahme andererseits auf gegenüberliegenden Seiten des Grundkörpers des Sanitärventilblocks. Damit bleibt das in die Einsatzaufnahme eingefügte Einsatzelement auf der dem mindestens einen Wassereinlass gegenüberliegenden Seite des Grundkörpers zugänglich, wobei es sich bei dieser Seite insbesondere um die Montageseite des Grundkörpers handeln kann.

In einer Weiterbildung der Erfindung beinhaltet der Sanitärventilblock eine Befestigungsvorrichtung, die zum lösbaren Befestigen des Grundkörpers eingerichtet ist, wobei sie von einer Montageseite des Grundkörpers her bedienbar ist. Zusätzlich ist das Einsatzelement von dieser Montageseite des Grundkörpers her in die Einsatzaufnahme einfügbar. Diese Weiterbildung hat den besonderen Vorteil, dass eine einzige Zugangsseite genügt, um den Sanitärventilblock mit seinem Grundkörper an einem zugedachten Einsatz-/Gebrauchsort, z.B. in einer Sanitärarmatur und speziell in einer sanitären Auslaufarmatur, montieren und das Einsatzelement in die Einsatzaufnahme einfügen zu können. Vorzugsweise ist das Einsatzelement lösbar in die Einsatzaufnahme eingefügt und kann dann bei Bedarf wiederum von der Montageseite des Grundkörpers her aus der Einsatzaufnahme herausgenommen werden, beispielsweise für Wartungszwecke bzw. zum Reinigen oder Austauschen des Einsatzelements. Ebenso kann bei Bedarf vorgesehen sein, dass der Grundkörper wiederum von der Montageseite her von seinem Einsatz-/Gebrauchsort demontierbar ist. Wenn der Sanitärventilblock in eine Sanitärarmatur eingebaut ist, braucht folglich zum Einfügen und Herausnehmen des Einsatzelements bzw. zum Montieren und Demontieren des Ventilblock-Grundkörpers lediglich die betreffende Montageseite des Grundkörpers zugänglich bleiben bzw. gemacht werden. Dies kann Wartungsarbeiten am Sanitärventilblock der Sanitärarmatur vergleichsweise einfach machen.

In einer Weiterbildung der Erfindung ist das Einsatzelement als zylindrische Einsatzpatrone ausgebildet, die eine umfangsseitige Mündungsöffnung und eine mit dieser in Fluidverbindung stehende stirnseitige Mündungsöffnung an einer ersten Stirnseite sowie eine Werkzeugschnittstelle für ein Montage/Demontage-Werkzeug an einer zweiten Stirnseite aufweist. Dies stellt eine vorteilhafte konstruktive Realisierung für das Einsatzelement dar. Über die Werkzeugschnittstelle kann das Einsatzelement von der Montageseite des Ventilblock-Grundkörpers her mit einem geeigneten Montage/Demontage-Werkzeug in der Einsatzaufnahme montiert bzw. von dieser wieder demontiert werden. Die Werkzeugschnittstelle kann beispielsweise eine solche für einen Schraubendreher, einen Mehrkant-Schraubenschlüssel etc. sein.

In einer Ausgestaltung der Erfindung weist die Einsatzpatrone einen zylindrischen Einsatzkörper mit der ersten und der zweiten Stirnseite auf, wobei an dem Einsatzkörper die umfangsseitige und die stirnseitige Mündungsöffnung ausgebildet sind. Zwischen der ersten Stirnseite und der umfangsseitigen Mündungsöffnung bildet der zylindrische Einsatzkörper eine hülsenförmige Aufnahme für das Partikelsieb und/oder den Durchflussregler. Dies stellt eine vorteilhafte konstruktive Realisierung der Einsatzpatrone dar, an der das Partikelsieb und/oder der Durchflussregler angebracht werden können.

In einer Weiterbildung der Erfindung sind die Einsatzaufnahme und die Kartuschenaufnahme jeweils zylindrisch im Grundkörper ausgebildet, und zwar so, dass eine Längsachse der zylindrischen Einsatzaufnahme senkrecht zu einer Längsachse der zylindrischen Kartuschenaufnahme verläuft. Dies kann in entsprechenden Anwendungen vorteilhaft für die Kompaktheit bzw. die Bauform und/oder das Wasserdurchströmungsverhalten des Grundkörpers des Sanitärventilblocks sein.

In einer Ausgestaltung der Erfindung mündet der mindestens eine Wasserauslass quer zur Längsachse der zylindrischen Einsatzaufnahme und quer zur Längsachse der zylindrischen Kartuschenaufnahme aus dem Grundkörper aus. Auch dies kann für entsprechende Anwendungen die Kompaktheit und/oder die Bauform und/oder das Wasserdurchströmungsverhalten des Grundkörpers des Sanitärventilblocks optimieren.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine perspektivische Explosionsansicht eines Sanitärventilblocks mit Grundkörper, Einsatzelement und Ventilkartusche,
- Fig. 2: eine Draufsicht auf den Sanitärventilblock von Fig. 1 von einer Montageseite des Sanitärventilblocks her in einem Einbauzustand,
- Fig. 3: eine Perspektivansicht des Grundkörpers,
- Fig. 4: eine Schnittansicht längs einer Linie IV-IV von Fig. 2,
- Fig. 5: eine Längsschnittansicht des Einsatzelements,
- Fig. 6: eine Längsschnittansicht eines zylindrischen Einsatzkörpers des Einsatzelements,
- Fig. 7: eine Perspektivansicht einer sanitären Auslaufarmatur mit abnehmbarer oberseitiger Abdeckung und einem eingebauten Sanitärventilblock entsprechend Fig. 1,
- Fig. 8: eine Längsschnittansicht der sanitären Auslaufarmatur von Fig. 7 und
- Fig. 9: eine ausschnittweise Draufsicht auf die Auslaufarmatur bei abgenommener Abdeckung.

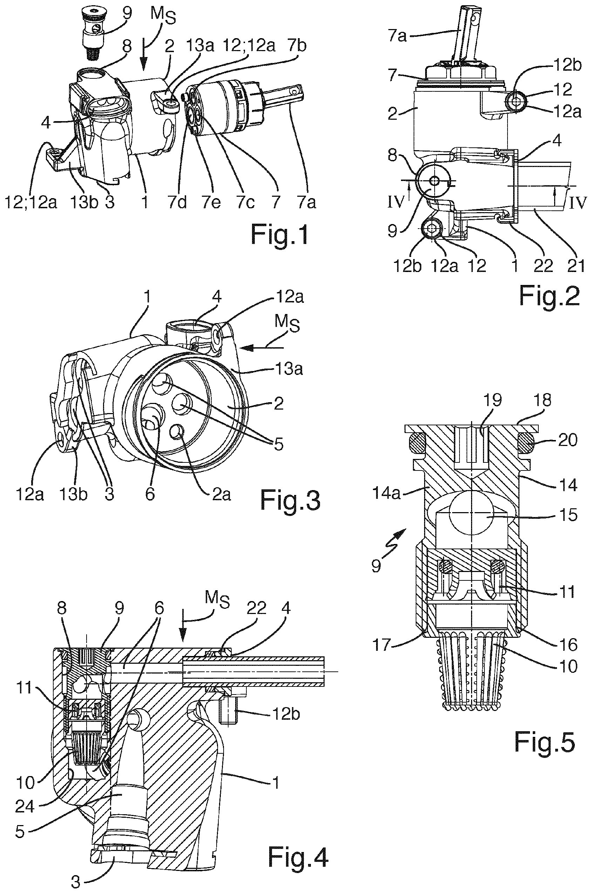

Der in Fig. 1 veranschaulichte Sanitärventilblock weist einen Grundkörper 1 auf, der eine Kartuschenaufnahme 2, mindestens einen Wassereinlass 3, mindestens einen Wasserauslass 4, eine sich vom mindestens einen Wassereinlass 3 zur Kartuschenaufnahme 2 erstreckende Zulaufkanalstruktur 5 und eine sich von der Kartuschenaufnahme 2 zum mindestens einen Wasserauslass 4 erstreckende Abführkanalstruktur 6 beinhaltet. Der Grundkörper 1 ist einzeln in Fig. 3 dargestellt. Die Fig. 2 und 4 zeigen den Sanitärventilblock in einem Einbauzustand, in welchem er sich an einem gewünschten Gebrauchsort befindet, wobei das zugehörige Umfeld in den Fig. 2 und 4 mit Ausnahme eines Wasserabführrohres 21 nicht gezeigt ist. Das Wasserabführrohr 21 ist mit seinem eintrittsseitigen Ende an den Wasserauslass 4 angekoppelt, z.B. unter Verwendung einer lösbaren und abdichtenden Raststeckverbindungseinheit 22.

Weiter umfasst der Sanitärventilblock eine in die Kartuschenaufnahme 2 eingefügte Ventilkartusche 7. Die Ventilkartusche 7 ist von einer beliebigen herkömmlichen Bauart, was hier folglich keiner weiteren Erläuterungen bedarf. Die Ventilkartusche 7 kann beispielsweise eine solche für ein Misch- und/oder Absperrventil sein, wie es für Sanitärarmaturen und insbesondere sanitäre Auslaufarmaturen gebräuchlich ist. So kann die Ventilkartusche 7 beispielsweise für eine sanitäre Auslaufarmatur vom herkömmlichen Einhebel-Bedientyp verwendet werden, wozu die Ventilkartusche 7 dann über einen zugehörigen Hebelankopplungsstutzen 7a verfügt.

Für eine Anwendung als sanitäres Mischventil kann der mindestens eine Wassereinlass 3 beispielsweise einen Kaltwassereinlass und einen Warmwassereinlass umfassen, und entsprechend beinhaltet dann die Zulaufkanalstruktur 5 eine Kaltwasserzuführung und eine davon getrennte Warmwasserzuführung zur Kartuschenaufnahme 2 und damit zur in die Kartuschenaufnahme 2 eingefügten Ventilkartusche 7, und die Abführkanalstruktur 6 beinhaltet entsprechend einen oder mehrere Mischwasser-Abführkanale, die zu dem einen oder den mehreren Wasserauslässen 4 als Mischwasserauslässe führen. Passend dazu weist die Ventilkartusche 7 in diesem Fall einen Kaltwassereingang 7b, einen Warmwassereingang 7c und wenigstens einen Mischwasserausgang 7d auf. Zur lagerichtigen, verdrehgesicherten Ankopplung der Ventilkartusche 7 mit ihren Ein- und Ausgängen 7b, 7c, 7d an die Zulaufkanalstruktur 5 und die Abführkanalstruktur 6 besitzt die Ventilkartusche 7 optional einen oder mehrere Drehstellungsstifte 7e, die in korrespondierende Stiftaufnahmen 2a der Kartuschenaufnahme 2 eingreifen.

Der Sanitärventilblock beinhaltet des Weiteren eine sich in die Abführkanalstruktur 6 hinein erstreckende Einsatzaufnahme 8 und ein in die Einsatzaufnahme 8 eingefügtes Einsatzelement 9, das ein Partikelsieb 10 und/oder einen Durchflussregler 11 aufweist. Wenn die Zulaufkanalstruktur 5 bzw. die Abführkanalstruktur 6 mehrere strömungstechnisch parallele Kanäle umfasst, ist vorzugsweise je ein Einsatzelement 9 für jeden dieser Kanäle und eine entsprechende Anzahl von Einsatzaufnahmen 8 vorgesehen, die sich jeweils in einen dieser Kanäle hinein erstrecken. Im gezeigten Ausführungsbeispiel weist das Einsatzelement 9 sowohl das Partikelsieb 10 als auch den Durchflussregler 11 auf, in alternativen Ausführungen weist es nur das Partikelsieb 10 oder nur den Durchflussregler 11 auf. Wie oben erwähnt, kann der Durchflussregler 11 z.B. auch ein Begrenzer, ein Belüfter oder ein Rückflussverhinderer sein.

In entsprechenden Ausführungsformen sind, wie gezeigt, die Einsatzaufnahme 8 und die Kartuschenaufnahme 2 jeweils zylindrisch und mit zueinander senkrechten Längsachsen am Grundkörper 1ausgebildet. Dabei mündet der mindestens eine Wasserauslass 4 in entsprechenden Realisierungen quer zur Längsachse der Einsatzaufnahme 8 und quer zur Längsachse der Kartuschenaufnahme 2 aus dem Grundkörper 1 aus. In alternativen Ausführungen sind die Einsatzaufnahme 8 und die Kartuschenaufnahme 2 mit zueinander nicht senkrechten, z.B. parallelen, Längsachsen und/oder mit nicht zylindrischer Form am Grundkörper 1 ausgebildet. In weiteren alternativen Ausführungen mündet der mindestens eine Wasserauslass 4 nicht quer zur Längsachse der Einsatzaufnahme 8 und/oder nicht quer zur Längsachse der Kartuschenaufnahme 2 aus dem Grundkörper 1 aus, sondern z.B. parallel oder schräg zu mindestens einer dieser Längsachsen.

In entsprechenden Ausführungsformen befinden sich, wie gezeigt, der mindestens eine Wassereinlass 3 einerseits und die Einsatzaufnahme 8 andererseits auf gegenüberliegenden Seiten des Grundkörpers 1. In alternativen Ausführungen befinden sich der mindestens eine Wassereinlass 3 einerseits und die Einsatzaufnahme 8 andererseits auf einer gleichen Seite des Grundkörpers 1 oder auf zwei benachbarten, aneinander anschließenden Seiten des Grundkörpers 1.

In entsprechenden Ausführungen ist, wie gezeigt, die Einsatzaufnahme 8 von einer Sacklochbohrung 24 im Grundkörper gebildet, wobei im gezeigten Beispiel die Abführkanalstruktur 6 an axial voneinander beabstandeten Positionen in die Sacklochbohrung quer einmündet und aus der Sacklochbohrung quer ausmündet. In alternativen Ausführungen ist die Einsatzaufnahme 8 anderweitig ausgebildet, z.B. als eine durchgehende Bohrung im Grundkörper 1.

Im gezeigten Ausführungsbeispiel beinhaltet der Sanitärventilblock zudem eine Befestigungsvorrichtung 12 zum lösbaren Befestigen des Grundkörpers 1. Die Befestigungsvorrichtung 12 ist zur Bedienung von einer Montageseite M_{S} des Grundkörpers 1 her eingerichtet. Das Einsatzelement 9 ist von der Montageseite M_{S} des Grundkörpers 1 her in die Einsatzaufnahme 8 einfügbar. Die Montageseite M_{S} ist im gezeigten Ausführungsbeispiel die in den Fig. 1 und 4 obere und in Fig. 3 rechte Seite und in Fig. 2 die Draufsichtseite von oben auf den Grundkörper 1.

Im gezeigten Ausführungsbeispiel umfasst die Befestigungsvorrichtung 12 eine oder mehrere, z.B. zwei, Schraubverbindungen mit jeweils einer Schraubenaufnahmeöffnung 12a und einer darin einfügbaren Befestigungsschraube 12b. In alternativen Ausführungen besitzt die Befestigungsvorrichtung 12 andere lösbare Befestigungsmittel, wie sie dem Fachmann als Alternativen für Schraubverbindungen geläufig sind, was hier keiner näheren Erläuterungen bedarf, z.B. lösbare Steck-, Schnapp-, Clips- oder Rastverbindungsmittel. Mittels der einen oder mehreren Befestigungsschrauben 12b kann der Sanitärventilblock mit seinem Grundkörper 1 an einem dafür vorgesehenen Einsatz- bzw. Gebrauchsort lösbar befestigt werden, wie in einer Sanitärarmatur, z.B. einer sanitären Auslaufarmatur. Wie gefordert, ist die jeweilige Befestigungsschraube 12b zu diesem Zweck von der Montageseite M_{S} des Grundkörpers 1 her bedienbar. Im gezeigten Beispiel sind die Aufnahmeöffnungen 12a für die Befestigungsschrauben 12b an zugehörigen Befestigungsflanschen 13a, 13b ausgebildet, die geeignet am Grundkörper 1 abstehen.

In der gezeigten Ausführungsform ist das Einsatzelement 9 als zylindrische Einsatzpatrone 14 ausgebildet, die eine umfangsseitige Mündungsöffnung 15 und eine mit dieser in Fluidverbindung stehende stirnseitige Mündungsöffnung 16 an einer ersten Stirnseite 17 aufweist. Des Weiteren besitzt die zylindrische Einsatzpatrone 14 an einer zweiten Stirnseite 18 eine Werkzeugschnittstelle 19 für ein zugehöriges Montage/Demontage-Werkzeug. Bei diesem Werkzeug kann es sich z.B. um einen Mehrkant-Schraubenschlüssel handeln, so dass in diesem Fall die Werkzeugschnittstelle 19 als Werkzeugaufnahme mit einem passenden mehreckigen Querschnitt ausgebildet ist. Optional trägt die Einsatzpatrone 14 einen Dichtring 20, mit dem die Einsatzaufnahme 8 bei eingefügtem Einsatzelement 9 nach außen abgedichtet ist.

Die Einsatzpatrone 14 kann beispielsweise, wie gezeigt, einen zylindrischen Einsatzkörper 14a mit der ersten und der zweiten Stirnseite 17, 18 aufweisen, wobei an dem zylindrischen Einsatzkörper 14a die umfangsseitige Mündungsöffnung 15 und die stirnseitige Mündungsöffnung 16 ausgebildet sind. Zwischen der ersten Stirnseite 17 und der umfangsseitigen Mündungsöffnung 15 bildet der Einsatzkörper 14a eine hülsenförmige Aufnahme 23 für das Partikelsieb 10 und/oder den Durchflussregler 11. Das Partikelsieb 10 und/oder der Durchflussregler 11 können in die Aufnahme 23 eingefügt und in dieser gehalten werden.

In alternativen Ausführungen ist das Einsatzelement 9 anderweitig realisiert. Dies umfasst Realisierungen unter Verwendung eines nicht-zylindrischen Einsatzkörpers und/oder ohne die erwähnte Werkzeugschnittstelle, wobei das Einsatzelement dann z.B. so ausgebildet sein kann, dass es vom Benutzer direkt ohne ein benötigtes Werkzeug montiert/demontiert werden kann. Bei weiteren Realisierungen sind die Mündungsöffnungen andersartig ausgebildet, z.B. in Form zweier stirnseitiger Mündungsöffnungen oder zweier umfangsseitiger Mündungsöffnungen. In weiteren alternativen Ausführungen ist/sind das Partikelsieb und/oder der Durchflussregler einteiliger Bestandteil eines entsprechend ausgebildeten Einsatzkörpers des Einsatzelements.

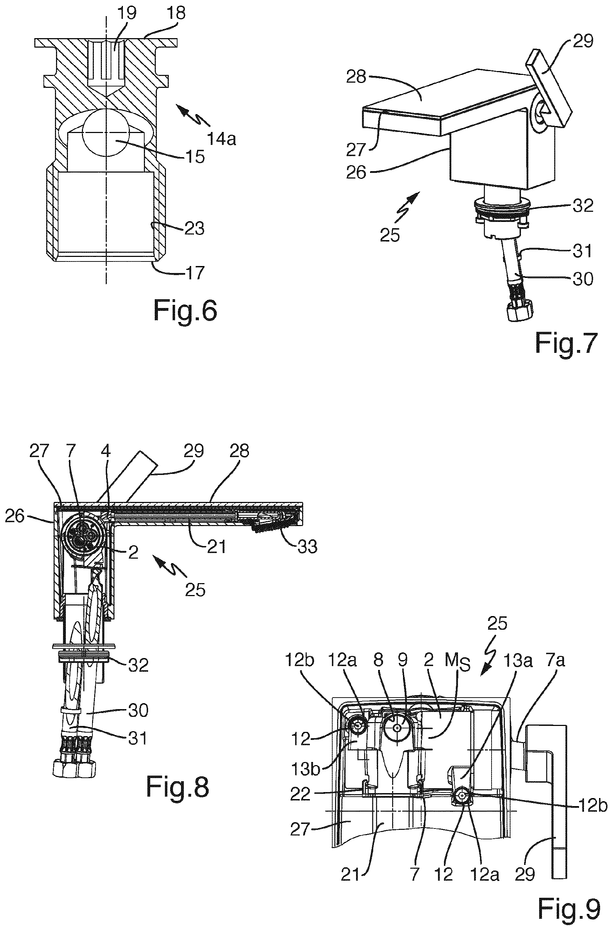

Die Fig. 7 bis 9 veranschaulichen eine beispielhafte Verwendung des Sanitärventilblocks in einer der Ausführungen gemäß den Fig. 1 bis 6 und den dazu oben erwähnten Alternativen für ein sanitäres Misch- und/oder Absperrventil vom Einhebel-Bedientyp in einer sanitären Wasserauslaufarmatur 25. Die Wasserauslaufarmatur 25 beinhaltet einen Armaturengrundkörper 26 mit einer als Wartungsöffnung 27 fungierenden, offenen Oberseite. Die offene Oberseite, d.h. die Wartungsöffnung 27, ist mit einer Abdeckung 28 verschlossen, die lösbar am Armaturengrundkörper 26 befestigt ist. Bei der sanitären Wasserauslaufarmatur 25 kann es sich beispielsweise um eine solche handeln, wie sie in der Offenlegungsschrift DE 10 2018 205 747 A1 offenbart ist, auf die für diesbezügliche Details ergänzend verwiesen werden kann.

Im Armaturengrundkörper 26 ist der Sanitärventilblock mit dem Grundkörper 1 und mit der in dessen Kartuschenaufnahme 2 eingefügter Ventilkartusche 7 sowie mit dem in die Einsatzaufnahme 8 eingefügten Einsatzelement 9 angeordnet. Als Bedienelement ist ein Bedienhebel 29 an den Hebelankopplungsstutzen 7a der Ventilkartusche 7 angekoppelt. Zugehörige Wasserzuleitungen, speziell eine Kaltwasserleitung 30 und eine Warmwasserleitung 31, sind in den Armaturengrundkörper 26 hinein zum mindestens einen Wassereinlass 3 des Grundkörpers 1 des Sanitärventilblocks geführt. Mittels eines an einer Befestigungsseite des Armaturengrundkörpers 26 angeordneten Befestigungssockels 32 kann die Wasserauslaufarmatur 25 an einem gewünschten Einsatzort befestigt werden, z.B. an einem Waschtisch, einer Badewanne oder einer Küchenspüle.

Das entsprechend Fig. 2 an den mindestens einen Wasserauslass 4 des Grundkörpers 1 des Sanitärventilblocks angekoppelte Wasserabführrohr 21 führt in diesem Ausführungsbeispiel zu einem an dessen stromabwärtiges Ende angekoppelten, strahlbildenden Wasseraustrittselement 33, aus dem zugeführtes Wasser in einer gewünschten Strahlform austritt.

Der Sanitärventilblock wird mittels der Befestigungsvorrichtung 12 mit den zugehörigen Schraubenaufnahmeöffnungen 12a und den zugehörigen Befestigungsschrauben 12b im Inneren des Armaturengrundkörpers 26 an letzterem fixiert, d.h. festgeschraubt. Wie speziell aus Fig. 9 ersichtlich, sind die Befestigungsvorrichtung 12 und das Einsatzelement 9 über die Wartungsöffnung 27 bei abgenommener Abdeckung 28 zugänglich, d.h. der Sanitärventilblock ist im Armaturengrundkörper 26 in einer Lage gehalten, in der seine Montageseite M_{S} nach oben weist, d.h. in Richtung der bei abgenommener Abdeckung 28 offenen Oberseite bzw. Wartungsöffnung 27 des Armaturengrundkörpers 26.

Somit kann das Einsatzelement 9 in einfacher Weise durch Abnehmen der Abdeckung 28 und anschließendes Demontieren aus seiner Einsatzaufnahme 8 z.B. für Wartungszwecke aus der Wasserauslaufarmatur 25 ausgebaut werden. Analog kann bei Bedarf der gesamte Sanitärventilblock nach Abnehmen der oberseitigen Abdeckung 28 der Auslaufarmatur 25 durch Lösen der Befestigungsvorrichtung 12 bzw. von deren Befestigungsschrauben 12b aus dem Armaturengrundkörper 26 ausgebaut bzw. umgekehrt durch Einfügen in den Armaturengrundkörper 26 und dortiges Festlegen mittels der Befestigungsvorrichtung 12 wieder in diesen eingebaut werden. Hierzu braucht lediglich ergänzend der Bedienhebel 29 vom Hebelankopplungsstutzen 7a abgenommen bzw. wieder an diesem angebracht werden.

Da das in den Sanitärventilblock integrierte Einsatzelement 9 bereits das Partikelsieb 10 und/oder den Durchflussregler 11 enthält, kann bei der Wasserauslaufarmatur 25 ein solches Partikelsieb bzw. ein solcher Durchflussregler im Bereich des strahlformenden Wasseraustrittselement 33 entfallen. Dadurch kann das Wasseraustrittselement 33 frei im Hinblick auf seine strahlbildende Wasseraustrittsfunktion ausgelegt sein, ohne dass ein dort zu platzierendes Partikelsieb und/oder ein dort zu platzierender Durchflussregler berücksichtigt werden braucht. Wie die Fig. 7 bis 9 deutlich machen, lässt sich der Sanitärventilblock mit dem integrierten Einsatzelement 9 in kompakter Bauweise platzsparend im Armaturengrundkörper 26 der Wasserauslaufarmatur anbringen.

Wie die gezeigten und die weiteren oben erwähnten Ausführungsbeispiele deutlich machen, stellt die Erfindung einen Sanitärventilblock zur Verfügung, in den vorteilhaft ein Einsatzelement mit Partikelsieb und/oder Durchflussregler integriert ist, wobei vorzugsweise eine Befestigungsvorrichtung zum lösbaren Befestigen des Grundkörpers des Sanitärventilblocks von einer einzigen Montageseite des Grundkörpers her bedienbar ist und das Einsatzelement von dieser Montageseite des Grundkörpers her in seine Einsatzaufnahme am Grundkörper des Sanitärventilblocks einfügbar und aus dieser herausnehmbar ist.

## Patentansprüche

1. Sanitärventilblock mit
- einem Grundkörper (1) mit einer Kartuschenaufnahme (2), mindestens einem Wassereinlass (3), mindestens einem Wasserauslass (4), einer sich vom mindestens einen Wassereinlass zur Kartuschenaufnahme (2) erstreckenden Zulaufkanalstruktur (5) und einer sich von der Kartuschenaufnahme (2) zum mindestens einen Wasserauslass (4) erstreckenden Abführkanalstruktur (6),
- einer in die Kartuschenaufnahme (2) eingefügten Ventilkartusche (7),
- einer sich in die Abführkanalstruktur (6) hinein erstreckenden Einsatzaufnahme (8) und
- einem in die Einsatzaufnahme (8) eingefügten Einsatzelement (9), das ein Partikelsieb (10) und/oder einen Durchflussregler (11) aufweist,
**dadurch gekennzeichnet, dass**
- die Einsatzaufnahme (8) von einer Sacklochbohrung (24) im Grundkörper (1) gebildet ist, wobei die Abführkanalstruktur (6) an axial voneinander beabstandeten Positionen in die Sacklochbohrung (24) quer einmündet und aus der Sacklochbohrung (24) quer ausmündet.

2. Sanitärventilblock nach Anspruch 1, weiter **dadurch gekennzeichnet, dass** sich der mindestens eine Wassereinlass (3) einerseits und die Einsatzaufnahme (8) andererseits auf gegenüberliegenden Seiten des Grundkörpers (1) befinden.

3. Sanitärventilblock nach Anspruch 1 oder 2, weiter **gekennzeichnet durch** eine Befestigungsvorrichtung (12) zum lösbaren Befestigen des Grundkörpers (1), wobei die Befestigungsvorrichtung (12) zur Bedienung von einer Montageseite (M_{S}) des Grundkörpers (1) her eingerichtet ist und wobei das Einsatzelement (9) von der Montageseite (M_{S}) des Grundkörpers (1) her in die Einsatzaufnahme (8 )einfügbar ist.

4. Sanitärventilblock nach einem der Ansprüche 1 bis 3, weiter **dadurch gekennzeichnet, dass** das Einsatzelement (9) als zylindrische Einsatzpatrone (14) ausgebildet ist, die eine umfangsseitige Mündungsöffnung (15) und eine mit dieser in Fluidverbindung stehende stirnseitige Mündungsöffnung (16) an einer ersten Stirnseite (17) sowie eine Werkzeugschnittstelle (19) für ein Montage/Demontage-Werkzeug an einer zweiten Stirnseite (18) aufweist.

5. Sanitärventilblock nach Anspruch 4, weiter **dadurch gekennzeichnet, dass** die Einsatzpatrone (14) einen zylindrischen Einsatzkörper (14a) mit der ersten und der zweiten Stirnseite (17, 18) aufweist, an dem die umfangsseitige Mündungsöffnung (15) und die stirnseitige Mündungsöffnung (16) ausgebildet sind und der zwischen der ersten Stirnseite (17) und der umfangsseitigen Mündungsöffnung (15) eine hülsenförmige Aufnahme (23) für das Partikelsieb (10) und/oder den Durchflussregler (11) bildet.

6. Sanitärventilblock nach einem der Ansprüche 1 bis 5, weiter **dadurch gekennzeichnet, dass** die Einsatzaufnahme (8) und die Kartuschenaufnahme (2) jeweils zylindrisch und mit zueinander senkrechten Längsachsen am Grundkörper (1) ausgebildet sind.

7. Sanitärventilblock nach Anspruch 6, weiter **dadurch gekennzeichnet, dass** der mindestens eine Wasserauslass (3) quer zur Längsachse der Einsatzaufnahme (8) und quer zur Längsachse der Kartuschenaufnahme (2) aus dem Grundkörper (1) ausmündet.

## Claims

1. Sanitary valve block, comprising
- a base body (1) having a cartridge receptacle (2), at least one water inlet (3), at least one water outlet (4), a supply channel structure (5) extending from the at least one water inlet to the cartridge receptacle (2) and a discharge channel structure (6) extending from the cartridge receptacle (2) to the at least one water outlet (4), and
- a valve cartridge (7) inserted in the cartridge receptacle (2),
- an insert receptacle (8) extending into the discharge channel structure (6), and
- an insert element (9) inserted into the insert receptacle (8), which insert element includes a particle screen (10) and/or a flow regulator (11),
**characterized in that**
- the insert receptacle (8) is formed by a blind hole (24) in the base body (1), wherein the discharge channel structure (6) leads transversely into the blind hole (24) and leads transversely out of the blind hole (24) on axially spaced positions.

2. Sanitary valve block according to claim 1, further **characterized in that** the at least one water inlet (3) on the one hand and the insert receptacle (8) on the other hand are located on opposite sides of the base body (1).

3. Sanitary valve block according to claim 1 or 2, further **characterized by** a fixing device (12) for removable fixing of the base body (1), wherein the fixing device (12) is configured for being operated from a mounting side (M_{S}) of the base body (1), and wherein the insert element (9) is insertable into the insert receptacle (8) from the mounting side (M_{S}) of the base body.

4. Sanitary valve block according to any of claims 1 to 3, further **characterized in that** the insert element (9) is formed as a cylindrical insert shell (14) including a circumferential mouth opening (15) and a face end-sided mouth opening (16) in fluid communication therewith on a first end face (17), and a tool interface (19) for a mounting/demounting tool on a second end face (18).

5. Sanitary valve block according to claim 4, further **characterized in that** the insert shell (14) includes a cylindrical insert body (14a) having the first and the second end faces (17, 18), on which body the circumferential mouth opening (15) and the end-sided mouth opening (16) are provided, and which body provides a sleeve-shaped receptacle (23) for the particle screen (10) and/or the flow regulator (11) between the first end face (17) and the circumferential mouth opening (15).

6. Sanitary valve block according to any one of claims 1 to 5, further **characterized in that** the insert receptacle (8) and the cartridge receptacle (2) each are cylindrical and provided on the base body (1) with longitudinal axes perpendicular to each other.

7. Sanitary valve block according to claim 6, further **characterized in that** the at least one water outlet (3) leads out of the base body (1) transversely to the longitudinal axis of the insert receptacle (8) and transversely to the longitudinal axis of the cartridge receptacle (2).

## Revendications

1. Bloc de vanne sanitaire, comprenant
- un corps de base (1) ayant un logement de cartouche (2), au moins une entrée d'eau (3), au moins une sortie d'eau (4), une structure de canal d'alimentation (5) s'étendant de ladite au moins une entrée d'eau au logement de cartouche (2), et une structure de canal d'évacuation (6) s'étendant du logement de cartouche (2) à ladite au moins une sortie d'eau (4),
- une cartouche de vanne (7) mise en place dans le logement de cartouche (2),
- un logement d'insertion (8) s'étendant jusque dans la structure de canal d'évacuation (6), et
- un élément d'insertion (9) mis en place dans le logement d'insertion (8), qui présente un tamis à particules (10) et/ou un régulateur de débit (11),
**caractérisé en ce que**
- le logement d'insertion (8) est formé par un trou borgne (24) dans le corps de base (1), la structure de canal d'évacuation (6) débouchant transversalement dans le trou borgne (24) et débouchant transversalement hors du trou borgne (24) à des positions espacées axialement l'une de l'autre.

2. Bloc de vanne sanitaire selon la revendication 1,
**caractérisé en outre en ce que** ladite au moins une entrée d'eau (3), d'une part, et le logement d'insertion (8), d'autre part, se trouvent sur des côtés opposés du corps de base (1).

3. Bloc de vanne sanitaire selon la revendication 1 ou 2,
**caractérisé en outre par** un dispositif de fixation (12) pour la fixation amovible du corps de base (1), le dispositif de fixation (12) étant conçu pour la commande depuis un côté de montage (M_{S}) du corps de base (1), et l'élément d'insertion (9) pouvant être mis en place dans le logement d'insertion (8) depuis le côté de montage (M_{S}) du corps de base (1).

4. Bloc de vanne sanitaire selon l'une des revendications 1 à 3,
**caractérisé en outre en ce que** l'élément d'insertion (9) est réalisé sous la forme d'une cartouche d'insertion cylindrique (14) qui présente sur une première face frontale (17) une ouverture d'embouchure périphérique (15) et une ouverture d'embouchure frontale (16) en liaison fluidique avec celle-ci, et sur une deuxième face frontale (18) une interface d'outil (19) pour un outil de montage/démontage.

5. Bloc de vanne sanitaire selon la revendication 4,
**caractérisé en outre en ce que** la cartouche d'insertion (14) présente un corps d'insertion cylindrique (14a) avec les première et deuxième faces frontales (17, 18), sur lequel sont formées l'ouverture d'embouchure périphérique (15) et l'ouverture d'embouchure frontale (16) et qui forme, entre la première face frontale (17) et l'ouverture d'embouchure périphérique (15), un logement en forme de manchon (23) pour le tamis à particules (10) et/ou le régulateur de débit (11).

6. Bloc de vanne sanitaire selon l'une des revendications 1 à 5,
**caractérisé en outre en ce que** le logement d'insertion (8) et le logement de cartouche (2) sont chacun réalisés sur le corps de base (1) en ayant des formes cylindriques et des axes longitudinaux perpendiculaires l'un à l'autre.

7. Bloc de vanne sanitaire selon la revendication 6,
**caractérisé en outre en ce que** ladite au moins une sortie d'eau (3) débouche hors du corps de base (1) transversalement à l'axe longitudinal du logement d'insertion (8) et transversalement à l'axe longitudinal du logement de cartouche (2).
